(19) Europäisches Patentamt
European Patent Office
Office européen des brevets

(11) EP 1 015 514 B1

(12) **EUROPÄISCHE PATENTSCHRIFT**

(45) Veröffentlichungstag und Bekanntmachung des Hinweises auf die Patenterteilung:
**18.07.2001 Patentblatt 2001/29**

(21) Anmeldenummer: **98952592.8**

(22) Anmeldetag: **17.09.1998**

(51) Int Cl.[7]: **C08K 9/04**, C08G 77/398, C08F 4/606, C08L 83/08

(86) Internationale Anmeldenummer:
**PCT/EP98/05920**

(87) Internationale Veröffentlichungsnummer:
**WO 99/14269 (25.03.1999 Gazette 1999/12)**

(54) **AUF ORGANOPOLYSILOXANMIKROGELPARTIKELN IMMOBILISIERTE ORGANOALUMINIUMVERBINDUNGEN**

ORGANO-ALUMINUM COMPOUNDS IMMOBILIZED ON ORGANOPOLYSILOXANE MICROGEL PARTICLES

COMPOSES D'ORGANO-ALUMINIUM IMMOBILISES SUR DES PARTICULES DE MICROGEL D'ORGANOPOLYSILOXANE

(84) Benannte Vertragsstaaten:
**AT BE DE ES FI FR GB IT NL**

(30) Priorität: **18.09.1997 DE 19741201**

(43) Veröffentlichungstag der Anmeldung:
**05.07.2000 Patentblatt 2000/27**

(73) Patentinhaber: **Wacker-Chemie GmbH**
**81737 München (DE)**

(72) Erfinder:
- **ALT, Helmut**
  **D-95445 Bayreuth (DE)**
- **BAUMANN, Frank**
  **D-84561 Mehring (DE)**
- **WEIS, Johann**
  **D-82054 Sauerlach (DE)**
- **KÖPPL, Alexander**
  **D-95445 Bayreuth (DE)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
**EP-A- 0 755 936**
**FR-A- 2 139 015**
**US-A- 4 925 821**
**US-A- 4 945 076**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 015 514 B1

Printed by Jouve, 75001 PARIS (FR)

## Beschreibung

Die Erfindung betrifft Partikel, die Organopolysiloxanmikrogelpartikel und darauf immobilisierte Organoaluminiumverbindungen umfassen, deren Herstellung und deren Einsatz als Cokatalysatoren zusammen mit Metallverbindungen der IV., V., VI. und VIII. Nebengruppe des Periodensystems zur Olefinoligomerisierung, -cyclisierung oder -polymerisation.

Aluminoxane erhält man durch kontrollierte Hydrolyse von Organoaluminiumverbindungen, z.B. stellt man durch die kontrollierte Hydrolyse von Trimethylaluminium mit Wasser oligomeres Methylaluminoxan her.

Organoaluminoxane finden ein großes Anwendungsgebiet als Cokatalysatoren bei metallkatalysierter Olefinoligomerisierung, -cyclisierung oder -polymerisation mit Metallverbindungen der IV., V., VI. und VIII. Nebengruppe des Periodensystems. Hierbei dient das zugesetzte Organoaluminoxan als Aktivator für die katalytisch aktive Metallverbindung. So werden z.B in US-A-5,206,401 Methylaluminoxane zu katalytisch aktiven Metallocenverbindungen von Metallen der IV. Nebengruppe des Periodensystems als Aktivatoren für die Olefinpolymerisation zugesetzt.

Bei der Durchführung der mit Organoaluminoxan aktivierten metallkatalysierten Olefinpolymerisation z. B. mit Metallocen- oder Halbsandwichkatalysatoren tritt immer das Problem des Reaktorfoulings auf, d. h. die Reaktorwände belegen sich während der Reaktion mit gebildeten Polyolefin. Die Temperaturkontrolle bei der Reaktion ist nicht mehr gegeben. Die Ablagerungen führen schließlich dazu, daß der Reaktor vollständig verklebt. Dies hat bei einer großtechnischen Produktion Anlagenscillegungen und somit hohe Kosten zur Folge. Ebenfalls problematisch bei der Polyolefinherstellung ist die Morphologie des anfallenden Produktes. Ohne weitere Zusätze erhält man ein feinpulvriges Produkt. Für eine weitere technische Verarbeitung sollte aber das Polymer grobteiliger, bevorzugt in sphärische Form mit einem mittleren Kugeldurchmesser von 0.1 bis 3 mm anfallen.

Das Reaktorfouling kann unterdrückt werden, wenn die Immobilisierungsierung des aktiven Katalysezentrums dadurch erfolgt, daß der Cokatalysator, wie Methylaluminoxan (MAO) oder Ethylaluminoxan auf Kieselgel aufgebracht wird. Dies ist beispielsweise in der US-A-4,925,821 beschrieben. Durch die Heterogenisierung des Cokatalysators wird das eigentlich polymerisationsaktive kationische Reaktionszentrum über eine ionische Wechselwirkung mit dem anionischen Organoaluminoxan quasi heterogenisiert.

Die Heterogenisierung erfolgt dabei in einer Mehrphasenreaktion, wobei Benetzungsprobleme, lange Reaktionszeiten, unvollständige Umsetzung sowie schwierige Reaktionskontrolle und Endpunktbestimmung der Reaktion in Kauf zu nehmen sind. Weiter bewirkt die Heterogenisierung des Cokatalysators eine signifikante Absenkung der katalytischen Aktivität. Ebenfalls muß bei den metallkatalysierten Umsetzungen von Olefinen der Cokatalysator im großen Überschuß, nämlich im 1 : 1000 bis 1: 20000-molaren Verhältnis zugesetzt werden. Das Verhältnis von katalytisch aktivem Metall zu Cokatalysator ist eher zufällig und kann nicht exakt eingestellt werden.

Es bestand die Aufgabe, Organoaluminiumverbindungen tragende Partikel bereitzustellen, die im Einsatz als Cokatalysatoren zusammen mit Metallverbindungen eine hohe katalytische Aktivität bei der Olefinpolymerisation, -oligomerisation oder -cyclisierung aufweisen, wobei die eingesetzte Menge an Organoaluminiumverbindungen tragenden Partikeln, d. h. das Verhältnis aktives Metallzentrum zu Aluminium, exakt steuerbar sein soll.

Die Erfindung betrifft Partikel, die Organopolysiloxanmikrogelpartikel mit einem Durchmesser von 5 bis 200 nm und darauf immobilisierte Organoaluminiumverbindungen umfassen.

Die erfindungsgemäßen Partikel sind nach der Herstellung in allen inerten organischen Lösemitteln zumindest fein suspendierbar oder löslich. Die Größe der Partikel liegt bei Einzelpartikeln von 10 nm bis hin zu 500 Mikrometern bei Agglomeraten.

Die Partikel sind vorzugsweise aus
$[\text{Organosiloxanmikrogelanteil}]_a$ $[\text{Aluminoxananteil}]_b$ $[\text{monomere und oligomere aluminiumorganische Verbindung}]_c$ zusammengesetzt, wobei

**a** 1 bis 99.9 Gew.-%
**b** 1 bis 99 Gew.-% und
**c** 0 bis 10 Gew.-% betragen, mit der Maßgabe, daß die Einzelkomponenten sich auf 100 Gew.-% aufsummieren.

Vorzugsweise beträgt **a** höchstens 50 Gew.-%, insbesondere höchstens 20 Gew.-%. Vorzugsweise beträgt **b** mindestens 10 Gew.-%, insbesondere mindestens 50 Gew.-%. Vorzugsweise beträgt **b** höchstens 90 Gew.-%. Vorzugsweise beträgt c mindestens 0,1 Gew.-%, insbesondere mindestens 0,5 Gew.-%, und besonders bevorzugt sind mindestens 2 Gew.-%. Vorzugsweise beträgt c höchstens 5 Gew.-%.

Der Organopolysiloxananteil der Partikel besteht bevorzugt aus

0,5 bis 80 Gew.-% Einheiten der allgemeinen Formel

$$[R^1_d R^2_{3-d} SiO_{1/2}] \quad \textbf{(1)},$$

0 bis 99.0 Gew.-% Einheiten der allgemeinen Formel

$$[R^1_e R^2_{2-e} SiO_{2/2}] \quad \textbf{(2)},$$

0 bis 99,5 Gew.-% Einheiten der allgemeinen Formel

$$[R^1_f R^2_{1-f} SiO_{3/2}] \quad \textbf{(3)}$$

und 0 bis 99,5 Gew.-% Einheiten der allgemeinen Formel

$$[SiO_{4/2}] \ \textbf{(4)},$$

wobei

**$R^1$** gleiche oder verschiedene einwertige Si-O-C-gebundene, gegebenenfalls funktionelle Gruppen tragende $C_1$- bis $C_{30}$-Kohlenwasserstoffreste oder Wasserstoff,
**$R^2$** gleiche oder verschiedene einwertige SiC-gebundene, gegebenenfalls funktionelle Gruppen tragende $C_1$- bis $C_{30}$-Kohlenwasserstoffreste, die auch gegebenenfalls durch die Heteroatome O, N, oder S unterbrochen sein können, oder Wasserstoff,
**d** die Werte 0, 1, 2 oder 3,
**e** die Werte 0, 1 oder 2 und
**f** die Werte 0 oder 1 bedeuten.

Beispiele für unsubstituierte Reste $R^1$ sind Alkylrest wie der Methyl-, Ethyl- und Propylrest; Cycloalkylreste wie der Cycolhexanrest; und Arylreste wie der Phenylrest.

Beispiele für funktionelle Gruppen tragenden Rest $R^1$ sind halogenierte Kohlenwasserstoffreste, vorzugsweise Halogenalkylreste, wie der 3,3,3-Chlormethyl-, 3-Chlorpropyl-, 3-Brompropyl-, 3,3,3-Trifluorpropyl- und 5,5,5,4,4,3,3-Heptafluorpentylrest.

Bei dem Rest **$R^1$** handelt es sich insbesondere um unsubstituierte $C_1$- bis $C_6$-Alkylreste, Phenylrest und Wasserstoff, insbesondere um den Methylrest.

Beispiele und bevorzugte Beispiele für unsubstituierte Reste **$R^2$** sind die vorstehend für **$R^1$** angegebenen Reste.

Beispiele für funktionelle Gruppen tragende Kohlenwasserstoffreste **$R^2$** sind halogenierte Kohlenwasserstoffreste, nämlich Halogenalkylreste, wie der 3,3,3-Chlormethyl-, 3-Chlorpropyl-, 3-Brompropyl-, 3,3,3-Trifluorpropyl- und 5,5,5,4,4,3,3-Heptafluorpentylrest und Halogenarylreste, wie der o-, m-, und p-Chlorphenylrest; primäre, sekundäre und tertiäre Amine tragende Kohlenwasserstoffreste, z.B Aminoalkylreste, wie der 2-Aminoethyl-, 3-Aminopropyl-, N-(2-Aminoethyl)3-aminopropyl-, N-(2-Aminoethyl)-3-amino-(2-methyl)propyl- und Pyrimidinylrest, Aminoarylreste, wie der Aminophenylrest; quarternäre Ammoniumreste; Mercaptogruppen tragende Kohlenwasserstoffreste, wie der 2-Mercaptoethyl- und 3-Mercaptopropylrest; Cyanoalkylreste, wie der 2-Cyanoethyl- und 3-Cyanopropylrest; Acrylgruppen tragende Kohlenwasserstoffreste, z.B Acryloxyalkylreste, wie der 3-Acryloxypropyl- und 3-Methacryloxypropylrest; Hydroxylgruppen tragende Kohlenwasserstoffreste, z.B Hydroxyalkylreste, wie der Hydroxypropylrest; Phosphonsäure-, Phosphonato-, und Sulfonatogruppen tragende Kohlenwasserstoffreste; gesättigte oder ungesättigte, lineare oder cyclische, durch die Heteroatome O, N, oder S unterbrochene Kohlenwasserstoffreste, wie der Furanyl-, Pyridyl- oder Thiophenylrest.

Bei dem Rest **$R^2$** handelt es sich bevorzugt um unsubstituierte $C_1$- bis $C_6$-Alkylreste und Phenylrest, insbesondere um den Methyl-, Ethyl- und Propylrest.

Über die Si-O-C-Bindung an **$R^1$** oder an einem weiteren Sauerstoffatom der funktionelle Gruppen tragenden Kohlenwasserstoffreste **$R^1$** und **$R^2$** können weitere Hauptgruppenelemente, wie Bor und Aluminium, angebunden sein.

Der Aluminoxananteil der Partikel besteht bevorzugt aus

0,5 bis 99 Gew.-% Einheiten der allgemeinen Formel

$$[X_iR^4_gR^3_{2-g}\ AlO_{1/2}] \qquad \textbf{(5),}$$

0 bis 99 Gew.-% Einheiten der allgemeinen Formel

$$[X_jR^4_hR^3_{1-h}\ AlO_{2/2}] \qquad \textbf{(6)}$$

und
0 bis 99 Gew.-% Einheiten der allgemeinen Formel

$$[AlO_{3/2}] \qquad \textbf{(7),}$$

wobei

- **$R^3$** ein Wasserstoffatom oder gleiche oder verschiedene einwertige Al-C-gebundene, SiC-gebundene, gegebenenfalls funktionelle Gruppen tragende $C_1$- bis $C_{30}$-Kohlenwasserstoffreste,
- **$R^4$** ein Wasserstoffatom oder gleiche oder verschiedene einwertige Al-O-C gebundene, gegebenenfalls funktionelle Gruppen tragende $C_1$- bis $C_{30}$-Kohlenwasserstoffreste,
- **X** ein Halogenatom,
- **g** die Werte 0, 1 oder 2,
- **h** die Werte 0 oder 1,
- **i** die Werte 0, 1, 2 oder 3, und
- **j** die Werte 0, 1 oder 2 bedeuten.

Bevorzugt sind **h** und **g** gleich 0.
Vorzugsweise bedeutet **X** ein Chlor- oder Fluoratom.
Beispiele und bevorzugte Beispiele für Reste **$R^3$** sind die vorstehend für $R^1$ aufgeführten Alkyl-, Cycloalkyl- und Arylreste sowie die halogenierten Kohlenwasserstoffreste.
Insbesondere bedeutet Rest **$R^3$** unsubstituierte $C_1$- bis $C_{10}$-Alkylreste, Phenylrest und Wasserstoff, insbesondere den Methyl-, Ethyl-, Propyl-, Isopropyl-, Butyl-, Isobutyl-, Hexyl- und Decylrest.
Beispiele für unsubstituierte Reste **$R^4$** sind die vorstehend für **$R^1$** aufgeführten Alkyl-, Cycloalkyl- und Arylreste.
Beispiele für funktionelle Gruppen tragende Reste **$R^4$** sind halogenierter Kohlenwasserstoff wie die vorstehend für **$R^1$** aufgeführten halogenierten Kohlenwasserstoffreste und 1,3-Diketonaddukte.
Bei dem Rest **$R^4$** handelt es sich bevorzugt um unsubstituierte $C_1$- bis $C_6$-Alkylreste und Phenylreste, insbesondere um den Methyl-, Ethyl- und iso-Butylrest.
Der Anteil der monomeren aluminiumorganischen Verbindung der Partikel besteht bevorzugt aus Verbindungen der allgemeinen Formeln

$$R^3_{3-i-j}R^4_{i-j}AlX_j \qquad \textbf{(8)},$$

$$R^5_2AlYR^5YR^5 \qquad \textbf{(9),}$$

$$(CH_2)_sAl\text{-}YR^s \qquad \textbf{(10)},$$

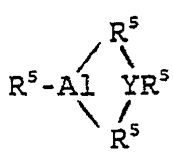

**(11),**

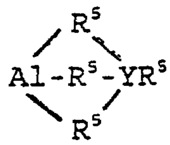 (12),

wobei

| | |
|---|---|
| **$R^5$** | ein $C_1$- bis $C_{30}$-Kohlenwasserstoffrest, |
| **Y** | eine ein freies Elektronenpaar aufweisende Gruppe, die ausgewählt wird aus Sauerstoff-, Schwefel- oder $NR^6$, |
| **$R^6$** | ein Wasserstoffatom oder einen Rest **$R^5$**, |
| **S** | ganzzahlige Werte von 3 bis 30 bedeuten und |
| **$R^3$** und **$R^4$,** | sowie **X, i** und **j** die obige Bedeutung haben. |

Der Anteil der oligomeren, zyklischen aluminiumorganischen Verbindung der Partikel besteht bevorzugt aus Verbindungen der allgemeinen Formel

$$(R^3AlO_{2/2})_k\ (R^4AlO_{2/2})_l\ (XAlO_{2/2})_m \qquad \textbf{(13),}$$

wobei

| | |
|---|---|
| **k, l** und **m** | jeweils ganzzahlige Werte von 3 bis 30 bedeuten, mit der Maßgabe, daß die Summe aus k+l+m mindestens drei beträgt und |
| **$R^3$** und **$R^4$**, | sowie **X, i** und **j** die obige Bedeutung haben. |

Der Anteil der oligomeren, linearen aluminiumorganischen Verbindung der Partikel besteht bevorzugt aus Verbindungen der allgemeinen Formel

$$R^3_{2\text{-}q\text{-}r}R^4_{q\text{-}r}X_rAlO\text{-}\ (R^3AlO_{2/2})_n(R^4AlO_{2/2})_o$$

$$(XAlO_{2/2})_pAlR^3_{2\text{-}q\text{-}r}R^4_{q\text{-}r}X_r \qquad \textbf{(14),}$$

wobei

**n, o** und **p** jeweils ganzzahlige Werte von 0 bis 50,
**q** und **r** jeweils die Werte 0, 1 oder 2 bedeuten und
**$R^3$, $R^4$** und **X** die obige Bedeutung haben.

Vorzugsweise bedeutet der Rest **$R^5$** $C_1$- bis $C_{10}$-Alkylreste und den Phenylrest, insbesondere den Methyl-, Ethyl-, Propyl-, Isopropyl- und Butylrest.

Bevorzugt handelt es sich bei den monomeren Aluminiumverbindungen um Triorganylaluminimverbindungen mit $C_1$- bis $C_{10}$-Alkyresten wie Trimethylaluminium, Triethylaluminium, Triisobutylaluminum und Tridecylaluminium; Diorganoaluminiumwasserstoffverbindungen mit $C_1$- bis $C_{10}$-Alkylresten, wie Dimethylaluminiumwasserstoff oder Didecylaluminumwasserstoff; Organoaluminiumdiwasserstoffverbindungen, wie Methylaluminiumwasserstoff; Diorganoaluminiumhalogenide, wie Dimethylaluminiumchlorid; Organoaluminiumdihalogenide, wie Methylaluminiumdichlorid; und Organoaluminiumsesquihalogenide, wie Trimethyldialuminiumdichlorid.

Besonders bevorzugt sind dabei die Triorganylaluminimverbindungen mit $C_1$- bis $C_{10}$-Alkylresten, insbesondere Trimethylaluminium, Triethylaluminium, Tripropylaluminium, Triisopropylaluminium, Tri-n-butylaluminium und Tridecylaluminium.

Vorzugsweise enthalten die Partikel mindestens 5 Gew.-% an Aluminoxan und die restlichen Einheiten der Partikel bestehen aus

1 bis 80 Gew.-% Einheiten der allgemeinen Formel (1),
0 bis 98 Gew.-% Einheiten der allgemeinen Formel (2),

0 bis 99 Gew.-% Einheiten der allgemeinen Formel (3) und
0 bis 99 Gew.-% Einheiten der allgemeinen Formel (4) mit der Maßgabe, daß die Summe der Einheiten der allgemeinen Formeln (3) und (4) mindestens 1 Gew.-% beträgt.

Die Partikel können noch monomere Aluminiumausgangsverbindungen von 0,01 bis zu 50 Gew.-%, insbesondere bis zu 10 Gew.-% relativ zur Gesamtmasse der Partikel enthalten.

Weiterer Gegenstand der Erfindung ist ein Verfahren zur Herstellung von Partikeln, die Organopolysiloxanmikrogelpartikel mit einem Durchmesser von 5 bis 200 nm und darauf immobilisierte Organoaluminiumverbindungen umfassen, bei dem aluminiumorganische Verbindungen, die aus Verbindungen der vorstehenden allgemeinen Formeln (8) bis (13) ausgewählt werden,
in Gegenwart von Organopolysiloxanmikrogelpartikeln mit einem Durchmesser von 5 bis 200 nm mit Hydroxidgruppen tragenden Verbindungen umgesetzt werden.

Geeignete Organopolysiloxanmikrogelpartikel sind vorzugsweise aus Einheiten der vorstehenden allgemeinen Formeln (1) bis (4) zusammengesetzt. Beispielsweise sind die Organopolysiloxanmikrogelpartikel z. B. Methyl-, Ethyl-, Phenyl-, Vinylpolysiloxanmikrogele.

Besonders geeignet zur Herstellung der erfindungsgemäßen Partikel sind die in der EP-A-744 432 beschriebenen Organopolysiloxanpartikel. Besonders bevorzugt sind die Organopolysiloxanpartikel, die bei 20°C zu mindestens 5 Gew.-% in Kohlenwasserstoffen, wie aromatischen unsubstituierten Kohlenwasserstoffen, wie Toluol, Benzol und Xylol, unsubstituierten aliphatischen Kohlenwasserstoffen, wie Pentan, Isopentan, Isobutan, Hexan und Cyclohexan, insbesondere Toluol, löslich sind.

Die eingesetzten Organopolysiloxanpartikel können frei sein von reaktiven Gruppen, wie Hydroxyl- oder Alkoxygruppen, und nur Kohlenwasserstoffreste enthalten.

Ebenfalls sehr geeignet sind die in der EP-A-744 432 beschriebenen Organopolysiloxanpartikel, welche in Summe mehr als 15 Gew.-% Einheiten der vorstehenden allgemeinen Formeln (1) bis (4) aufweisen, welche einen oder drei Si-C gebundene(n) Reste $R^2$ tragen und nicht in einem dritten Schritt von restlichen OH- oder Kohlenwasserstoffoxygruppen befreit worden sind.

Die verwendbaren aluminiumorganischen Verbindungen der allgemeinen Formeln (8) bis (13) reagieren mit Hydroxidgruppen tragenden Verbindungen zu Aluminoxanen ab.

Die aluminiumorganischen Verbindungen können als Feststoffe, Flüssigkeiten oder Gase eingesetzt werden. Bevorzugt ist dabei der Einsatz als Flüssigkeit oder in Lösung.

Bevorzugt werden die vorstehend bei den allgemeinen Formeln (8) bis (13) als bevorzugt beschriebenen monomeren aluminiumorganischen Verbindungen eingesetzt.

Wenn die aluminiumorganischen Verbindungen in Lösung eingesetzt werden, sind als Lösungsmittel die Kohlenwasserstoffe bevorzugt, welche vorstehend als Lösungsmittel für die Organopolysiloxanmikrogelpartikel bevorzugt geeignet sind.

Vorzugsweise werden auch die Organopolysiloxanmikrogelpartikel in den vorstehend beschriebenen Kohlenwasserstoffen gelöst eingesetzt.

Die gelösten Reaktionspartner werden vorzugsweise anschließend gemischt. Optional können die aluminiumorganischen Verbindungen auch direkt in der Organopolysiloxanmikrogellösung gelöst werden.

Die bevorzugten Konzentrationen an Organopolysiloxanmikrogelpartikeln wie auch an aluminiumorganischen Verbindungen sind mindestens 1 Gew.-%, höchstens 50 Gew.-%, insbesondere höchstens 30 Gew.-% und besonders bevorzugt höchstens 20 Gew.-%, bezogen auf das Gesamtgewicht der Lösung.

Als mit Hydroxidgruppen tragende Verbindungen werden vorzugsweise Wasser, Hydroxidgruppen tragende $C_1$- bis $C_{40}$-Kohlenwasserstoffe, wie primäre, sekundäre und tertiäre Alkohole, Diole, Triole, Phenole und Zucker oder anorganische Hydroxidgruppen tragende Verbindungen, wie Borsäure, oder Aluminiumhydroxid eingesetzt. Besonders bevorzugt ist Wasser, welches in Substanz fest, flüssig, gasförmig, als Kristallwasser oder in Emulsion oder Mikroemulsion zugegeben werden kann.

Die molaren Verhältnissse von Hydroxidgruppen zur aluminiumorganischen Verbindung werden vorzugsweise von Molverhältnis 0,01 : 1 bis 10 : 1 variiert.

Die Zugabe von Hydroxidgruppen tragenden Verbindungen erfolgt vorzugsweise unter Rühren. Vorzugsweise betragen dabei die Temperaturen -80°C bis 250°C, insbesondere -20°C bis 100°C und besonders bevorzugt -40°C bis 0°C.

Danach werden die Reaktionen vorzugsweise in einem Temperaturbereich von -80°C bis 200°C, insbesondere in einem Temperaturbereich von -80°C bis 140°C, und besonders bevorzugt in einem Temperaturbereich von 0°C bis 80°C weitergeführt.

Während der Reaktion kann Durchmischung erfolgen, man kann aber auch ohne Durchmischung abreagieren lassen. Bevorzugt ist dabei das Durchmischen der Reaktionslösung.

Die Reaktionszeiten betragen zwischen wenigen Minuten und einem Tag, bevorzugt zwischen einer Stunde

und zehn Stunden, und besonders bevorzugt zwischen 5 Minuten und zwei Stunden. Der Endpunkt der Reaktion kann durch das Ende der Gasentwicklung bestimmt werden.

Die fertigen Partikel bilden bei Verwendung eines Lösungsmittels während der Reaktion eine Suspension, die für weitere Umsetzungen oder Verwendungen, beispielsweise als Cokatalysator, eingesetzt werden kann.

Die fertigen Partikel können auch vorzugsweise unter Inertgasatmosphäre, bevorzugt Argon, und bei den oben aufgeführten Temperaturen abfiltriert, mit einem Lösemittel, wie Kohlenwasserstoff, nachgewaschen werden.

Der Filterkuchen kann vorzugsweise danach beispielsweise bei Raumtemperatur im Hochvakuum getrocknet werden. Optional kann der Cokatalysator auch ohne weitere Trocknung im feuchten Zustand unter Inertgas aufbewahrt werden.

Eine andere Variante der Aufarbeitung ist das Abziehen des Lösungsmittels unter vermindertem Druck.

Ein weiterer Gegenstand der Erfindung ist der Einsatz der Partikel als Cokatalysatoren zusammen mit Metallverbindungen der IV., V., VI. und VIII. Nebengruppe des Periodensystems zur Olefinoligomerisierung, -cyclisierung oder -polymerisation.

Aus den Metallkatalysatoren der IV., V., VI. und VIII. Nebengruppe des Periodensystems und den Partikeln als Cokatalysatoren wird dabei vorzugsweise in einem inerten Lösungsmittel, insbesondere in Kohlenwasserstoff, nämlich aromatischen unsubstituierten Kohlenwasserstoffen, wie Toluol, Benzol und Xylol, unsubstituierten aliphatischen Kohlenwasserstoffen, wie Pentan, Isopentan, Isobutan, Hexan und Cyclohexan, insbesondere Toluol, ein immobilisiertes und aktiviertes Katalysatorsytem hergestellt.

Dazu werden die Partikel beispielsweise direkt in der bei der Herstellung entstehenden Suspension eingesetzt oder vorzugsweise unter Inertgas wie Argon in einem geeigneten inerten Lösungsmittel suspendiert, dispergiert oder teilgelöst. Geeignete inerte Lösemittel sind die vorstehend erwähnten Kohlenwasserstoffe. Die Partikel werden dann mit Metallkatalysator vermischt, vorzugsweise unter Rühren. Der Metallkatalysator kann in Substanz oder in einem geeigneten inerten Lösungsmittel suspendiert, dispergiert, teilgelöst oder gelöst sein, wobei die vorstehenden Kohlenwasserstoffe bevorzugt sind.

Das Vermischen der Partikel mit dem Metallkatalysator kann bei -80°C bis 200°C vorgenommen werden. Bevorzugt ist dabei ein Temperaturbereich von - 40°C bis 60°C, inbesondere Temperaturen von 0°C bis 30°C. Die Temperatur bei der anschließenden Reaktion liegt vorzugsweise in den oben beschriebenen Temperaturintervallen.

Während der Reaktion kann Durchmischung erfolgen, man kann aber auch ohne Durchmischung abreagieren lassen. Bevorzugt ist dabei das Durchmischen der Reaktionslösung. Die Reaktionszeiten betragen vorzugsweise 1 Minute bis einen Tag, bevorzugt 1 Minute bis 10 Stunden, und besonders bevorzugt 1 Minute bis 2 Stunden.

Das immobilisierte und aktivierte Katalysatorsytem wird vorzugsweise unter Inertgasatmosphäre, insbesondere Argon, bei den oben aufgeführten Temperaturen abfiltriert und vorzugsweise mit einem inerten Lösemittel, wie den vorstehend erwähnten Kohlenwasserstoffen, nachgewaschen. Der farbige Filterkuchen kann danach bei vorzugsweise -50°C bis 100°C im Hochvakuum getrocknet werden. Optional kann das immobilisierte und aktivierte Katalysatorsytem auch ohne weitere Trocknung im feuchten Zustand unter Inertgas aufbewahrt werden.

Die Verhältnisse von Metall im Metallkatalysator zu Aluminium in den Partikeln können beliebig eingestellt werden. Diese Verhältnisse können mittels Elementaranalyse bestimmt werden.

Die verwendeten Metallverbindungen sind vorzugsweise Metallocene und Halbsandwichverbindungen der Metalle der Nebengruppe des Periodensystems. Derartige Metallverbindungen sind beispielsweise in der US-A-4,925,821 beschrieben. Bevorzugt sind Metallverbindungen, die Cyclopentadienylliganden aufweisen. Bevorzugte Metalle der Metallverbindungen sind Titan, Zirkonium, Vanadium und Niob.

Ein weiterer Gegenstand der Erfindung ist der Einsatz der Partikel als Cokatalysatoren zusammen mit Metallverbindungen der IV., V., VI. und VIII. Nebengruppe des Periodensystems zur Olefinoligomerisierung, -cyclisierung oder -polymerisation.

Aus den Metallkatalysatoren der IV., V., VI. und VIII. Nebengruppe des Periodensystems und den Partikeln als Cokatalysatoren wird dabei vorzugsweise in einem inerten Lösungsmittel, insbesondere in Kohlenwasserstoff, nämlich aromatischen unsubstituierten Kohlenwasserstoffen wie Toluol, Benzol und Xylol, unsubstituierten aliphatischen Kohlenwasserstoffen, wie Pentan, Isopentan, Isobutan, Hexan und Cyclohexan, insbesondere Toluol, ein immobilisiertes und aktiviertes Katalysatorsytem hergestellt.

Die Partikel und die damit zusammen mit Metallverbindungen hergestellten immobilisierten und aktivierten Katalysatorsysteme können sofort nach der Herstellung trocken, nicht getrocknet oder erst nach beliebig langer Lagerung ohne Aktivitätsverlust zur Olefinoligomerisierung, -cyclisierung oder -polymerisation bei Batchprozessen oder kontinuierlichen Prozessen eingesetzt werden.

Für die Olefinopolymerisation werden diese Katalysatorsysteme mit Lösemittel als Suspension oder ohne Lösemittel für eine Gasphasenreaktion bzw. Wirbelschichtverfahren im Reaktor vorgelegt oder kontinuierlich zugegeben. Für die Olefinpolymerisation geeignete Lösemittel sind die vorstehend beschriebenen inerten Kohlenwasserstoffe. Auch das zu polymerisierende Olefin selbst, wie Propen, kann als Lösungsmittel dienen.

Im nächsten Schritt der Olefinpolymerisation wird das Monomer oder die Monomermischung, wenn es nicht

schon als Lösungmittel vorliegt, auf einmal oder kontinuierlich, oder bei Copolymerisationen gegebenenfalls sukzessive, fest, flüssig oder gasförmig zudosiert.

Geeignete Olefine sind je nach verwendetem Katalysatorsystem z. B. lineare oder cyclische $C_2$- bis $C_{30}$-mono-1-Olefine, wie Ethylen, Propylen, 1-Hexen, Cyclopenten, Cyclohexen und Norbornen, ebenso mehrfach ungesättigte, lineare oder cyclische $C_4$- bis $C_{30}$-Olefine, wie 1,3-Butadien, Isopren, 1,3-Pentadien, Styrol, $\alpha$-Methyl-Styrol und Norbornadien. Alle vorstehenden Olefine können homo- als auch in beliebigen Verhältnissen copolymerisiert werden.

Während der Reaktion kann Durchmischung erfolgen.
Die Reaktionstemperatur beträgt vorzugsweise -80°C bis 200°C, insbesondere 0°C bis 140°C, besonders bevorzugt 60°C bis 120°C. Der Druck während der Reaktion kann vorzugsweise von 1 bar bis 400 bar variieren.

Das anfallende Produkt kann ohne weiter Aufarbeitung weiter verarbeitet werden. Optional kann das Polymer noch mit alkalischen, wässrigen Medien, wie Natriumhydroxidlösung, nachbehandelt werden, was aber nicht bevorzugt ist.

In den nachfolgenden Beispielen sind, falls jeweils nicht anders angegeben,

a) alle Mengenangaben auf das Gewicht bezogen
b) alle Drücke 0,10 MPa (abs.)
c) alle Temperaturen 20° C.

## Beispiele:

Alle Arbeiten werden unter Schutzgas (Argon) ausgeführt. Die verwendeten Lösungsmittel wurden über Na/K-Legierung unter Schutzgas frisch destilliert.

| Liste eingesetzter Chemikalien | Firma/Literatur |
|---|---|
| a) $Cp_2ZrCl_2$ | Merck, 8.03027.0005 |
| b) $[FluCMe_2Cp]ZrCl_2$ | J.A. Ewen, JACS (1988) *110*, 6255 |
| c) $[FluSiMe_2Flu]ZrCl_2$ | S.J. Palackal, Dissertation, Univ. Bayreuth 1991 |
| d) $[Flu\text{-}C_2H_4\text{-}Flu]ZrCl_2$ | S.J. Palackal, Dissertation, Univ. Bayreuth 1991 |
| e) $[(2,6\text{-}^1Pr_2Ph)N{=}CH\text{-}CH{=}N\ (2,6\text{-}^iPr_2Ph)]NiBr_2$ | WO-A-96/23010 |
| f) Trimethylaluminium | Merck, 8.14110.0150 |
| g) Me-$\mu$-Gel | Organopolysiloxanpartikel wie in EP-A-744 432 in Beispiel 1 beschrieben |

**Beispiel 1**(Wasser wird in Substanz zugegeben):

2,0 g Me-$\mu$-Gel werden in 250 ml Toluol gelöst und mit 30 ml einer 2-molaren Lösung von Trimethylaluminium (TMA) in Toluol versetzt. Die Dispersion wird eine Stunde bei Raumtemperatur gerührt und auf -78°C gekühlt. Anschließend werden 0,75 ml Wasser langsam zugetropft. Nach Ende der Gasentwicklung wird vier Stunden bei Raumtemperatur gerührt, filtriert, zweimal mit Pentan gewaschen und im Hochvakuum getrocknet. Ausbeute: 85% (bezogen auf TMA) eines weißen Feststoffes.

**Beispiel 2**(Wasser wird gasförmig zugegeben):

2,0 g Me-$\mu$-Gel werden in 250ml Toluol gelöst und mit 30 ml einer 2-molaren Lösung von Trimethylaluminium (TMA) in Toluol versetzt. Die Dispersion wird eine Stunde bei Raumtemperatur gerührt und auf 40°C erhitzt. Anschließend werden 0,75 ml Wasser mittels eines gesättigten Argonstromes zur Dispersion hinzugefügt. Nach Ende der Gasentwicklung wird vier Stunden bei Raumtemperatur gerührt, filtriert, zweimal mit Pentan gewaschen und im Hochvakuum getrocknet. Ausbeute: 100% eines weißen Feststoffes.

**Beispiel 3** (Olefinpolymerisation):

Die Feststoffe aus Beispiel 1 und 2 können als heterogene Co-Katalysatoren eingesetzt werden. Dazu werden 0,5 g aus Bsp. 1 bzw. 2 des weißen Feststoffes in 500 ml Pentan suspendiert und 0,001 mmol Katalysatorvorstufe ($Cp_2ZrCl_2$) in Toluollösung zugegeben. Die Suspension wird direkt zur Polymerisation verwendet (11 Reaktor, 10 bar Ethylendruck, 60 min., 60°C) (Al:Zr=300:1).

Polymerisationsversuche:

| | Aktivität [kg PE/mmol h] | Fouling |
|---|---|---|
| Beispiel 1 | 0,8 | nein |
| Beispiel 2 | 0,7 | nein |

**Beispiel 4** (Co-Katalysator wird ohne Aufreinigung direkt mit den Katalysatorvorstufen umgesetzt):

2,0 g Me-μ-Gel werden in 250 ml Toluol gelöst und mit 30 ml einer 2-molaren Lösung von Trimethylaluminium (TMA) in Toluol versetzt. Die Dispersion wird eine Stunde bei Raumtemperatur gerührt und auf 40°C erhitzt. Anschließend werden 0,75 ml Wasser mittels eines gesättigten Argonstromes zur Dispersion hinzugefügt. Nach Ende der Gasentwicklung wird vier Stunden bei Raumtemperatur gerührt. 0,2 mmol eines Metallocendichloridkomplexes werden als Feststoff zugegeben und 30 min. aktiviert. Dann wird filtriert, zweimal mit Pentan gewaschen und im Hochvakuum getrocknet . Ausbeute: 100% eines je nach Metallocendichloridkomplex gefärbten Feststoffes.
Verwendete Metallocendichloridkomplexe (Al:Zr=300:1):

a)$Cp_2ZrCl_2$ Cp=$C_5H_5$ ${}^iPr$=isopropyl
b) [$FluCMe_2Cp$]$ZrCl_2$ Flu=$C_{13}H_8$ Ph=Phenyl
c) [$FluSiMe_2Flu$] $ZrCl_2$
d) [Flu-$C_2H_4$-Flu]$ZrCl_2$
e) [(2,6-${}^iPr_2$Ph)N=CH-CH=N(2,6-${}^iPr_2$Ph)]$NiBr_2$

**Beispiel 5**(Olefinpolymerisation mit den in Beispiel 4 hergestellten Katalysatoren):

Die Olefinpolymerisation wird analog Beispiel 3 durchgeführt.

Polymerisationsergebnisse (11 Reaktor, 10 bar Ethylendruck, 60 min., 60°C):

| Nummer | Aktivität [kg PE/mmol h] |
|---|---|
| Beispiel 3, a | 1,0 |
| Beispiel 3, b | 0,2 |
| Beispiel 3, c | 1,5 |
| Beispiel 3, d | 2,0 |
| Beispiel 3, e | 0,1 |

Bei allen Polymerisationsversuchen trat kein Fouling auf.

**Beispiel 6**(Vergleichsbeispiel: trockenes Kieselgel als Trägermaterial):

3.0 g ausgeheiztes Kieselgel werden mit 30 ml einer 30% MAO-Lösung (Gew.-% in Toluol) versetzt und 4 h bei Raumtemperatur gerührt. Anschließend wird filtriert und zweimal mit je 25 ml Toluol und Pentan gewaschen. Nach Trocknung im Hochvakuum erhält man 4,55 g eines farblosen Pulvers.

**Beispiel 7**(Vergleichsbeispiel: wasserhaltiges Kieselgel als Trägermaterial) :

2,0 g nicht ausgeheiztes Kieselgel (Merck, Wassergehalt ca. 7%) wird mit Trimethylaluminium versetzt und 4 h bei 50°C gerührt. Anschließend wird filtriert und zweimal mit je 25 ml Toluol und Pentan gewaschen. Nach Trocknung im Hochvakuum erhält man 3,25 g eines farblosen Pulvers.

**Beispiel 8**(Olefinpolymerisation mit den in Beispielen 6 und 7 hergestellten Co-Katalysator-Systemen):

Polymerisationsversuche analog den in Beispiel 3 beschriebenen Polyermisationen (11 Reaktor, 500 ml Pentan, 10 bar Ethylendruck, 60 min., 60°C)

Katalysatorvorstufe: $Cp_2ZrCl_2$

| Beispiel | Al:Zr | Aktivität [$kg^{PE}/mmol^{Zr}h$] |
|---|---|---|
| 8a | 7000:1 | 0.2 |
| 8b | 300:1 | 0 |
| 8c | 300:1 | 0.02 |

Beispiele 8b und 8c zeigen im Vergleich mit Beispiel 4, daß bei vergleichbaren Al:Zr-Verhältnissen die katalytische Aktivität des erfindungsgemäßen Co-Katalysators um Größenordnungen höher ist.

**Beispiel 9** (Vergleichsbeispiel):

1.) Herstellung von Harzen:

In einem 2 1 Kolben werden bei Raumtemperatur 209 g (1 mol) Tetraethoxysilan und ein Disiloxan oder Disiloxangemisch gemischt. Zu der Mischung werden 51.3 g Wasser und 0.46g einer 20% wäßrigen Chlorwasserstofflösung gegeben. Der Kolben wird auf 65°C erwärmt und 2 Stunden bei dieser Temperatur gehalten. Anschließend wird bei 900 mbar 115 g Ethanol abdestilliert. Die Reaktionslösung wird mit 150 g Toluol versetzt und mit Natronlauge neutralisiert. Die Reaktionslösung wird anschließend bei 70°C für zwei Stunden gehalten. Anschließend wird die Lösung filtriert und das Lösungsmittel abgedampft. Es werden immer weiße, in Toluol lösliche Pulver mit einem Partikeldurchmesser von 2-3 nm erhalten.

Tabelle 1:

| nach oben beschriebener Methode hergestellte MQ-Harze | | | |
|---|---|---|---|
| Probe | Disiloxan | Molares M:Q Verhältnis | Funktionelle Gruppe |
| MQ1 | 88.6 g Hexamethyldisiloxan | 0.5 : 1 | Methyl |
| MQ2 | Hexamethyldisiloxan/ Tetramethyldivinyldisiloxan | 0.6 : 1 | Methyl / Vinyl |
| MQ3 | Tetramethyldivinyldisiloxan | 0.5 : 1 | Vinyl |
| MQ4 | Tetramethyldisiloxan | 0.45 : 1 | Wasserstoff |

2.) Herstellung der immobilisierten Co-Katalysatoren

Die Cokatalysatoren werden wie im Beispiel 1 beschrieben hergestellt. Man erhält vier Proben CoMQ1, CoMQ2, CoMQ3, und CoMQ4:

3.) Die Proben CoMQ1 bis CoMQ4 werden weiter behandelt, wie in Beispiel 4 beschrieben. Als Katalysatorvorstufe wurde dabei nur der Komplex 4a aus Beispiel 4 verwendet.

4.) Die Olefinpolymerisation wird analog Beispiel 3 durchgeführt. Die erhaltenen Aktivitäten sind in der Tabelle 2 zusammengefaßt.

Tabelle 2:

| Polymerisationsversuche bei einem Verhältnis Al : Zr von 300 : 1 | | |
|---|---|---|
| Cokatalysatoren | Aktivität [kg PE / $mmol^{zr}h$] | Fouling |
| CoMQ1 | 0.1 | Nein |
| CoMQ2 | 0.2 | Nein |

Tabelle 2: (fortgesetzt)

| Polymerisationsversuche bei einem Verhältnis Al : Zr von 300 : 1 | | |
|---|---|---|
| Cokatalysatoren | Aktivität [kg PE / mmol$^{Zr}$h] | Fouling |
| CoMQ3 | 0.1 | Nein |
| CoMQ4 | 0.02 | Leichte |

Wie aus Tabelle 2 ersichtlich liegen die Aktivitäten im Vergleich zu den erhaltenen Aktivitäten für den Katalysator 3a in Beispiel 5, bei vergleichbaren Al : Zr-Verhältnissen um den Faktor 5-10 niedriger. Auch tritt bei CoMQ4 leichtes Reaktorfouling auf, d.h. die Reaktorwände sind mit einer ca. Imm dicken PE-Schicht belegt.

## Patentansprüche

1. Partikel, die Organopolysiloxanmikrogelpartikel mit einem Durchmesser von 5 bis 200 nm und darauf immobilisierte Organoaluminiumverbindungen umfassen.

2. Partikel nach Anspruch 1, die aus [Organosiloxanmikrogelanteil]$_a$ [Aluminoxananteil]$_b$ [monomere und oligomere aluminiumorganische Verbindung]$_c$ zusammengesetzt sind, wobei

   **a** 1 bis 99.9 Gew.-%
   **b** 1 bis 99 Gew.-% und
   **c** 0 bis 10 Gew.-% betragen, mit der Maßgabe, daß die Einzelkomponenten sich auf 100 Gew.-% aufsummieren.

3. Partikel nach Anspruch 2, bei denen der Organopolysiloxananteil aus

   0,5 bis 80 Gew.-% Einheiten der allgemeinen Formel

   $$[R^1_d R^2_{3-d} SiO_{1/2}] \quad \textbf{(1)},$$

   0 bis 99.0 Gew.-% Einheiten der allgemeinen Formel

   $$[R^1_e R^2_{2-e} SiO_{2/2}] \quad \textbf{(2)},$$

   0 bis 99,5 Gew.-% Einheiten der allgemeinen Formel

   $$[R^1_f R^2_{1-f} SiO_{3/2}] \quad \textbf{(3)}$$

   und
   0 bis 99,5 Gew.-% Einheiten der allgemeinen Formel

   $$[SiO_{4/2}] \quad \textbf{(4)},$$

   besteht, wobei

   **$R^1$** gleiche oder verschiedene einwertige Si-O-C-gebundene, ge gebenenfalls funktionelle Gruppen tragende $C_1$- bis $C_{30}$-Kohlenwasserstoffreste oder Wasserstoff,
   **$R^2$** gleiche oder verschiedene einwertige SiC-gebundene, gegebenenfalls funktionelle Gruppen tragende $C_1$ - bis $C_{30}$-Kohlenwasserstoffreste die auch gegebenenfalls durch die Heteroatome O, N, oder S unterbrochen sein können, oder Wasserstoff,
   **d** die Werte 0, 1, 2 oder 3,

**e** die Werte 0, 1 oder 2 und
**f** die Werte 0 oder 1 bedeuten.

**4.** Partikel nach Anspruch 2 oder 3, bei denen der Aluminoxananteil der Partikel aus

0,5 bis 99 Gew.-% Einheiten der allgemeinen Formel

$$[X_1R^4_gR^3_{2-g}\ AlO_{1/2}] \qquad \textbf{(5)},$$

0 bis 99 Gew.-% Einheiten der allgemeinen Formel

$$[X_jR^4_hR^3_{1-h}\ AlO_{2/2}] \qquad \textbf{(6)}$$

und
0 bis 99 Gew.-% Einheiten der allgemeinen Formel

$$[AlO_{3/2}] \qquad \textbf{(7)},$$

besteht, wobei

**$R^3$** ein Wasserstoffatom oder gleiche oder verschiedene einwertige Al-C-gebundene, SiC-gebundene, gegebenenfalls funktionelle Gruppen tragende $C_1$- bis $C_{30}$-Kohlenwasserstoffreste,
**$R^4$** ein Wasserstoffatom oder gleiche oder verschiedene einwertige Al-O-C gebundene, gegebenenfalls funktionelle Gruppen tragende $C_1$- bis $C_{30}$-Kohlenwasserstoffreste,
**X** ein Halogenatom,
**g** die Werte 0, 1 oder 2,
**h** die Werte 0 oder 1,
**i** die Werte 0, 1, 2 oder 3, und
**j** die Werte 0, 1 oder 2 bedeuten.

**5.** Partikel nach Anspruch 2 bis 4, bei denen der Anteil der monomeren, aluminiumorganischen Verbindung aus Verbindungen der allgemeinen Formeln

$$R^3_{3-i-j}R^4_{i-j}AlX_j \ \textbf{(8)},$$

$$R^5_2AlYR^5YR^5 \qquad \textbf{(9)},$$

$$(CH_2)_sAl\text{-}YR^5 \qquad \textbf{(10)},$$

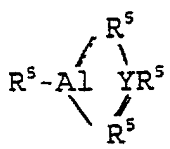

**(11),**

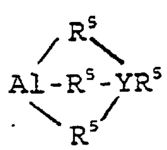

**(12),**

besteht, wobei

**$R^5$** ein $C_1$- bis $C_{30}$-Kohlenwasserstoffrest,
**Y** eine ein freies Elektronenpaar aufweisende Gruppe, die aus Sauerstoff-, Schwefel- oder $NR^6$ ausgewählt wird,
**$R^6$** ein Wasserstoffatom oder einen Rest $R^5$,
**s** ganzzahlige Werte von 3 bis 30 bedeuten und
**$R^3$** und **$R^4$**, sowie **X, i** und **j** die in Anspruch 4 angegebene Bedeutung haben.

**6.** Partikel nach Anspruch 2 bis 5, bei denen der Anteil der oligomeren, zyklischen aluminiumorganischen Verbindung aus Verbindungen der allgemeinen Formel

$$(R^3AlO_{2/2})_k\ (R^4AlO_{2/2})_1\ (XAlO_{2/2})_m \qquad \textbf{(13),}$$

besteht, wobei

**k, l** und **m** jeweils ganzzahlige Werte von 3 bis 30 bedeuten, mit der Maßgabe, daß die Summe aus **k+l+m** mindestens drei beträgt und
**$R^3$** und **$R^4$**, sowie **X**, **i** und **j** die in Anspruch 4 angegebene Bedeutung haben.

**7.** Partikel nach Anspruch 2 bis 6, bei denen der Anteil der oligomeren, linearen aluminiumorganischen Verbindung aus Verbindungen der allgemeinen Formel

$$R^3_{2-q-r}R^4_{q-r}X_rAlO\text{-}\ (R^3AlO_{2/2})_n(R^4AlO_{2/2})_o$$
$$(XAlO_{2/2})_pAlR^3_{2-q-r}R^4_{q-r}X_r \qquad \textbf{(14),}$$

besteht, wobei

**n, o** und **p** jeweils ganzzahlige Werte von 0 bis 50,
**q** und **r** jeweils die Werte 0, 1 oder 2 bedeuten und
**$R^3$, $R^4$** und **X** die in Anspruch 4 angegebene Bedeutung haben.

**8.** Verfahren zur Herstellung von Partikeln gemäß Anspruch 1 bis 7, bei dem aluminiumorganische Verbindungen, die aus Verbindungen der vorstehenden allgemeinen Formeln (8) bis (13) ausgewählt werden, in Gegenwart von Organopolysiloxanmikrogelpartikeln mit einem Durchmesser von 5 bis 200 nm mit Hydroxidgruppen tragenden Verbindungen umgesetzt werden.

**9.** Verwendung der Partikel gemäß Anspruch 1 bis 7 als Cokatalysatoren zusammen mit Metallverbindungen der IV., V., VI. und VIII. Nebengruppe des Periodensystems zur Olefinoligomerisierung, -cyclisierung oder -polymerisation.

## Claims

**1.** Particles comprising organopolysiloxane gel microparticles having a diameter of from 5 to 200 nm and organoaluminium compounds immobilized thereon.

**2.** Particles according to Claim 1 which are composed of [organosiloxane gel microparticle content]$_a$ [aluminoxane content]$_b$ [monomeric and oligomeric organoaluminium compound]$_c$, where

**a** is from 1 to 99.9% by weight
**b** is from 1 to 99% by weight and
**c** is from 0 to 10% by weight, with the proviso that the individual components add up to 100% by weight.

**3.** Particles according to Claim 2, in which the organopolysiloxane content consists of

from 0.5 to 80% by weight of units of the general formula

$$[R^1_d R^2_{3-d} SiO_{1/2}] \qquad \textbf{(1)},$$

from 0 to 99.0% by weight of units of the general formula

$$[R^1_e R^2_{2-e} SiO_{2/2}] \qquad \textbf{(2)},$$

from 0 to 99.5% by weight of units of the general formula

$$[R^1_f R^2_{1-f} SiO_{3/2}] \qquad \textbf{(3)}$$

and
from 0 to 99.5% by weight of units of the general formula

$$[SiO_{4/2}] \qquad \textbf{(4)},$$

where

- **$R^1$** are identical or different monovalent, Si-O-C-bonded $C_1$- to $C_{30}$-hydrocarbon radicals optionally carrying functional groups, or hydrogen,
- **$R^2$** are identical or different monovalent, SiC-bonded $C_1$- to $C_{30}$-hydrocarbon radicals optionally carrying functional groups and optionally also interrupted by the heteroatoms O, N or S, or hydrogen,
- **d** has the value 0, 1, 2 or 3
- **e** has the value 0, 1 or 2, and
- **f** has the value 0 or 1.

**4.** Particles according to Claim 2 or 3, in which the aluminoxane content of the particles consists of

from 0.5 to 99% by weight of units of the general formula

$$[X_i R^4_g R^3_{2-g} AlO_{1/2}] \qquad \textbf{(5)},$$

from 0 to 99% by weight of units of the general formula

$$[X_j R^4_h R^3_{1-h} AlO_{2/2}] \qquad \textbf{(6)}$$

and
from 0 to 99% by weight of units of the general formula

$$[AlO_{3/2}] \qquad \textbf{(7)},$$

where

- **$R^3$** is a hydrogen atom or identical or different monovalent, Al-C-bonded, SiC-bonded $C_1$- to $C_{30}$-hydrocarbon radicals optionally carrying functional groups,
- **$R^4$** is a hydrogen atom or identical or different monovalent, Al-O-C-bonded $C_1$- to $C_{30}$-hydrocarbon radicals optionally carrying functional groups,
- **X** is a halogen atom,
- **g** has the value 0, 1 or 2,
- **h** has the value 0 or 1,

**i** has the value 0, 1, 2 or 3, and
**j** has the value 0, 1 or 2.

**5.** Particles according to Claims 2 to 4, in which the monomeric, organoaluminium compound content consists of compounds of the general formulae

$$R^3_{3-i-j}R^4_{i-j}AlX_j \qquad \textbf{(8),}$$

$$R^5_2AlYR^5YR^5 \qquad \textbf{(9),}$$

$$(CH_2)_5Al\text{-}YR^5 \qquad \textbf{(10),}$$

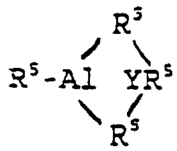

(11),

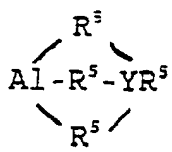

(12),

where

| | |
|---|---|
| **$R^5$** | is a $C_1$- to $C_{30}$-hydrocarbon radical, |
| **Y** | is a group having a free pair of electrons, selected from oxygen, sulphur and $NR^6$, |
| **$R^6$** | is a hydrogen atom or a radical **$R^5$,** |
| **s** | is an integer from 3 to 30, and |
| **$R^3$, $R^4$, X, i** and **j** | are as defined in Claim 4. |

**6.** Particles according to Claims 2 to 5, in which the oligomeric, cyclic organoaluminium compound content consists of compounds of the general formula

$$(R^3AlO_{2/2})_k\ (R^4AlO_{2/2})_1\ (XAlO_{2/2})_m \qquad \textbf{(13),}$$

where

| | |
|---|---|
| **k, l** and **m** | are each an integer from 3 to 30, with the proviso that the sum **k+l+m** is at least three, and |
| **$R^3$, $R^4$, X, i** and **j** | are as defined in Claim 4. |

**7.** Particles according to Claims 2 to 6, in which the oligomeric, linear organoaluminium compound content consists of compounds of the general formula

$$R^3_{2-q-r}R^4_{q-r}X_rAlO\text{-}(R^3AlO_{2/2})_n(R^4AlO_{2/2})_o$$

$$(XAlO_{2/2})_pAlR^3_{2-q-r}R^4_{q-r}X_r \qquad \textbf{(14),}$$

where

**n, o** and **p** are each integers from 0 to 50,
**q** and **r** each have a value of 0, 1 or 2, and
**$R^3$, $R^4$** and **X** are as defined in Claim 4.

**8.** Process for the preparation of particles according to Claims 1 to 7, in which organoaluminium compounds selected from compounds of the above general formulae (8) to (13) are reacted with compounds carrying hydroxide groups in the presence of organopolysiloxane gel microparticles having a diameter of from 5 to 200 nm.

**9.** The use of the particles according to Claims 1 to 7 as cocatalysts, together with metal compounds from sub-groups IV, V, VI or VIII of the Periodic Table, for the oligomerization, cyclization or polymerization of olefins.

**Revendications**

**1.** Particules qui contiennent des particules de microgel d'organopolysiloxane présentant un diamètre de 5 à 200 nm et des composés d'organoaluminium qui y sont immobilisés.

**2.** Particules selon la revendication 1, qui sont composées de [proportion de microgel d'organosiloxane]$_a$ [proportion d'oxane d'aluminium]$_b$ [composé organique d'aluminium monomère et oligomère]$_c$ où

a est égal à 1 jusqu'à 99,9% en poids,
b est égal à 1 jusqu'à 99% en poids, et
c est égal à 0 jusqu'à 10% en poids, sous réserve que la somme des différents composants soit de 100% en poids.

**3.** Particules selon la revendication 2, dans lesquelles la proportion d'organopolysiloxane est constituée de

0,5 à 80% en poids d'unités de formule générale

$$[R^1_d R^2_{3-d} SiO_{1/2}] \quad (1),$$

0 à 99,0% en poids d'unités de formule générale

$$[R^1_e R^2_{2-e} SiO_{2/2}] \quad (2),$$

0 à 99,5% en poids d'unités de formule générale

$$[R^1_f R^2_{1-f} SiO_{3/2}] \quad (3),$$

et
0 à 99,5% en poids d'unités de formule générale

$$[SiO_{4/2}] \quad (4),$$

formules dans lesquelles

$R^1$ signifie des radicaux hydrocarbonés en $C_1$ à $C_{30}$ identiques ou différents, monovalents, liés par Si-O-C, portant le cas échéant des groupements fonctionnels, ou un hydrogène,
$R^2$ signifie des radicaux hydrocarbonés en $C_1$ à $C_{30}$ identiques ou différents, monovalents, liés par SiC, portant le cas échéant des groupements fonctionnels, qui peuvent le cas échéant également être interrompus par les hétéroatomes O, N ou S, ou un hydrogène,
d signifie les valeurs 0, 1, 2 ou 3,
e signifie les valeurs 0, 1 ou 2, et

f signifie les valeurs 0 ou 1.

4. Particules selon les revendications 2 ou 3, dans lesquelles la proportion d'oxane d'aluminium des particules est constituée de

0,5 à 99% en poids d'unités de formule générale

$$[X_1R^4_gR^3_{2-g}AlO_{1/2}] \quad (5),$$

0 à 99% en poids d'unités de formule générale

$$[X_jR^4_hR^3_{1-h}AlO_{2/2}] \quad (6),$$

et
0 à 99% en poids d'unités de formule générale

$$[AlO_{3/2}] \quad (7),$$

formules dans lesquelles

$R^3$ signifie un atome d'hydrogène ou des radicaux hydrocarbonés en $C_1$ à $C_{30}$ identiques ou différents, monovalents, liés par Al-C, liés par SiC, portant le cas échéant des groupements fonctionnels,
$R^4$ signifie un atome d'hydrogène ou des radicaux hydrocarbonés en $C_1$ à $C_{30}$ identiques ou différents, monovalents, liés par Al-O-C, portant le cas échéant des groupements fonctionnels,
X signifie un atome d'halogène,
g signifie les valeurs 0, 1 ou 2,
h signifie les valeurs 0 ou 1,
i signifie les valeurs 0, 1, 2 ou 3, et
j signifie les valeurs 0, 1 ou 2.

5. Particules selon les revendications 2 à 4, dans lesquelles la proportion de composé organique d'aluminium monomère est constituée de composés de formules générales

$$R^3_{3-i-j}R^4_{i-j}AlX_j \quad (8),$$

$$R^5_2AlYR^5YR^5 \quad (9),$$

$$(CH_2)_sAl\text{-}YR^5 \quad (10),$$

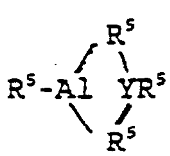

(11),

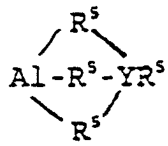 (12),

$R^5$ signifiant un radical hydrocarboné en $C_1$ à $C_{30}$,
Y signifiant un groupement présentant une paire d'électrons libres, choisi parmi un oxygène, un soufre ou $NR^6$,
$R^6$ signifiant un atome d'hydrogène ou un radical $R^5$,
s signifiant une valeur entière de 3 à 30 et
$R^3$ et $R^4$, ainsi que X, i et j ayant la signification indiquée dans la revendication 4.

**6.** Particules selon les revendications 2 à 5, dans lesquelles la proportion de composé organique d'aluminium oligomère cyclique est constituée de composés de formule générale

$$(R^3AlO_{2/2})_k\ (R^4AlO_{2/2})_l\ (XAlO_{2/2})_m \qquad (13),$$

où

k, l et m signifient à chaque fois des valeurs entières de 3 à 30, sous réserve que la somme de k+l+m soit au moins égale à trois et
$R^3$ et $R^4$, ainsi que X, i et j ont la signification indiquée dans la revendication 4.

**7.** Particules selon les revendications 2 à 6, dans lesquelles la proportion de composé organique d'aluminium oligomère linéaire est constituée de composés de formule générale

$$R^3_{2-q-r}R^4_{q-r}X_rAlO\text{-}\ (R^3AlO_{2/2})_n(R^4AlO_{2/2})_o$$
$$(XAlO_{2/2})_pAlR^3_{2-q-r}R^4_{q-r}X_r \qquad (14),$$

où

n, o et p signifient à chaque fois des valeurs entières de 0 à 50,
q et r signifient à chaque fois les valeurs 0, 1 ou 2 et
$R^3$, $R^4$ et X ont la signification indiquée dans la revendication 4.

**8.** Procédé pour la préparation de particules selon les revendications 1 à 7, dans lequel les composés organiques d'aluminium qui sont choisis parmi des composés des formules générales précédentes (8) à (13), sont transformés en présence de particules de microgel d'organopolysiloxane présentant un diamètre de 5 à 200 nm, avec des composés portant des groupements hydroxyde.

**9.** Utilisation des particules selon les revendications 1 à 7 comme cocatalyseurs avec des composés métalliques du IVème, Vème, VIème et VIIIème groupe secondaire du système périodique pour l'oligomérisation, la cyclisation ou la polymérisation d'oléfines.